**Europäisches Patentamt**

**(19)** **European Patent Office**

**Office européen des brevets**

(11) Publication number : **0 397 343 B1**

# (12) EUROPEAN PATENT SPECIFICATION

(45) Date of publication of patent specification :
15.06.94 Bulletin 94/24

(51) Int. Cl.⁵ : **C08J 9/10, C08K 5/3417**

(21) Application number : **90304372.7**

(22) Date of filing : **24.04.90**

(54) **Blowing Agents.**

(30) Priority : **11.05.89 GB 8910867**

(43) Date of publication of application :
**14.11.90 Bulletin 90/46**

(45) Publication of the grant of the patent :
**15.06.94 Bulletin 94/24**

(84) Designated Contracting States :
**AT BE CH DE DK ES FR GB GR IT LI LU NL SE**

(56) References cited :
**EP-A- 0 073 435
LU-A- 58 485
CHEMICAL ABSTRACTS, vol. 86, no. 4, 24th
January 1977, page 52, abstract no.17716m,
Columbus, Ohio, US; & JP-A-76 114 469**

(73) Proprietor : **SCHERING INDUSTRIAL
PRODUCTS LIMITED
Mount Pleasant House,
Huntingdon Road
Cambridge CB3 ODA (GB)**

(72) Inventor : **Krutki, Peter
11 Cabot Close
Warrington, Cheshire (GB)**
Inventor : **Connell, Andrew Mark
5 Moreton Drive
Bury, Lancs (GB)**

(74) Representative : **Wells, Norman David et al
AgrEvo UK Limited
Patent Department
Chesterford Park
Saffron Walden Essex CB10 1XL (GB)**

EP 0 397 343 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

EP 0 397 343 B1

## Description

This invention concerns blowing agent compositions for use in the production of peroxide cross-linked polyethylene foams having improved properties, and a process for the production of such foams.

A widely used process for the manufacture of peroxide cross-linked polyethylene foams comprises heating the polymer together with a cross-linking agent, eg dicumyl peroxide, and a chemical blowing agent, this being a compound which decomposes on heating to liberate the gases which cause the foaming. Such gases will only be retained in the polymer, and thus give good quality foams, if the rate of decomposition of the blowing agent and the crosslinking reaction itself are synchronised at the temperature employed. If the blowing agent decomposes too soon, the gases evolved escape from the polymer and, if the cross-linking proceeds too quickly, insufficient expansion is possible and poor cell structure can result.

Considerable advantages exist in the use of relatively low reaction temperatures, since these avoid the decomposition of the polymer, leading to whiter foamed products. There are also savings in production costs. However, at the desired temperatures, it has been found that the blowing agent must usually be used in conjunction with an activator which causes it to decompose sufficiently.

The use of azodicarbonamide as a chemical blowing agent in the production of polyethylene foams is well known, as also is the use of this compound in combination with an activator, eg a zinc compound, which modifies the temperature and rate at which the compound liberates the foam-forming gases.

It is also well known to use a coagent in conjunction with the cross-linking agent, eg a polyfunctional unsaturated compound, which increases the rate of peroxide cross-linking so as to balance the rate of cross-linking with the temperature and rate at which the activated blowing agent decomposes. Such coagents are usually polymerisable polyfunctional unsaturated compounds such as acrylates or methacrylates of polyhydric alcohols or allyl compounds, a specific example of such a compound being trimethylolpropanetri-methacrylate. Unfortunately, most coagents are liquids at normal temperatures or are low-melting, waxy solids, which are difficult to blend with other ingredients, giving formulations which are not free-flowing and which are generally difficult to disperse in the polymer. An attempt to overcome this problem by adsorbing the coagent on silica has not been wholly successful since it is found that this reduces the efficacy of the formulation. In addition, the use of less active coagents such as methacrylates leads to inadequate cross-linking at the gas liberation temperature, and consequent sticking of the foam to the production surfaces, pin-holed surfaces, coarse cell structure, and inadequate gas retention in the foam.

The compound m-phenylenebismaleimide is known as a peroxide cross-linking agent in the production of non-foamed rubbers and also as a coagent in the production of non-foamed peroxide cross-linked chlorosulphonated polyethylene, but this compound is far too reactive to be employed as a coagent in the preparation of polyethylene foams, giving premature cross-linking relative to the evolution of gas, and leading to foams having undesirable properties.

We have now found that it is surprisingly possible to employ compounds containing two or more maleimide (1H-pyrrole-2,5-dione) groups as coagents in the production of polyethylene foams, provided that certain other compounds are also present.

Accordingly, in one aspect, this invention provides a method for the production of peroxide cross-linked polyethylene foam in which polyethylene is heated with a peroxide cross-linking agent in the presence of a suitable amount of a blowing agent composition which comprises azodicarbonamide, one or more compounds containing two or more maleimide groups, and a free-radical scavenging compound.

In another aspect, the invention provides a coagent composition for use in the production of peroxide cross-linked polyethylene foams, which comprises a free-flowing blend of one or more compounds containing two or more maleimide groups, and a free-radical scavenging compound.

In a further aspect, the invention provides a blowing agent composition for use in the production of peroxide cross-linked polyethylene foams, which comprises a free-flowing blend of azodicarbonamide, one or more compounds containing two or more maleimide groups, and a free-radical scavenging compound.

The free-radical scavenging compound slows the activity of the maleimide compound sufficiently and reproducibly so that by suitable adjustment of the amounts of each employed, peroxide cross-linked polyethylene foams may be produced having a fine, uniform cell structure and a smooth, pinhole-free, non-sticky surface. Moreover, being a high melting point solid, the formulations employed may be free-flowing.

The blowing agent composition preferably contains from 80 to 99 % by weight of azodicarbonamide, especially from 90 to 98 % by weight thereof.

The compound containing two or more maleimide groups is preferably N,N'-p,p'-diphenylmethanebismaleimide, N,N'-m-phenylenebismaleimide, N,N'-p-phenylenebismaleimide, N,N'-m-tolylenebismaleimide, 1,1'-(oxydi-4,1-phenylene)bis[1H-pyrrole-2,5-dione], 1,1'-(2,2,4-trimethyl-1,6-hexanediyl)bis[1H-pyrrole-2,5-dione], 1,1',1''-(1,3,5-benzenetriyl)tris[1H-pyrrole-2,5-dione] or 1,1'-(1,3-phenylene)bis[3-methyl-1H-pyrrole-

2

2,5-dione]. A particularly preferred such compound is N,N'-m-phenylenebismaleimide.

The compound containing two or more maleimide groups is preferably present in the composition in an amount of from 0.1-10% by weight, especially from 0.2-5% by weight.

Preferably, the blowing agent composition also contains an activator for the azodicarbonamide, for example a zinc compound, eg zinc oxide, zinc carbonate, zinc laurate or diamminozinc diisocyanate, or a mixture of such compounds. Such an activator is preferably present in the composition in an amount of from 0.1 to 10% by weight, especially from 1 to 5% by weight.

The free-radical scavenging compound employed is preferably an antioxidant compound, particularly a phenol having 1 to 4 phenolically connected OH groups (eg hydroquinone or 4-methoxyphenol), especially a sterically-hindered phenol (eg bisphenol A, ie 2,2-bis(4-hydroxyphenyl)propane, Irganox® 1010, ie 3-(3,5-di-t-butyl-4-hydroxyphenyl)propionate, Permanax® WSP, ie 2,2'-methylenebis[6-(1-methylcyclohexyl)-p-cresol or Topanol® CA, ie 1,1,3-tris(2-methyl-4-hydroxy-5-t-butylphenyl)butane), a phenylenediamine (eg N-isopropyl-N'-phenyl-p-phenylenediamine), a trimethylquinoline derivative (eg polymeric dihydrotrimethylquinoline), a sulphide (eg dilaurylthiodipropionate), or a phosphite (eg tris(nonylphenyl)phosphite). The free-radical scavenging compound may alternatively be, for example, triallylcyanurate or triallylisocyanurate. It is preferably present in the composition in an amount of from 0.02 to 3 % by weight.

The invention is illustrated by the following Examples:

## EXAMPLES 1-5

The following ingredients were blended together in a Papenmeier blender (all figures being wt%):

| Ingredient | Ex 1 | Ex 2 | Ex 3 | Ex 4 | Ex 5 |
|---|---|---|---|---|---|
| azodicarbonamide | 96.2 | 98.0 | 94.0 | 96.0 | 97.0 |
| zinc laurate | 1.5 | 1.0 | 1.0 | 1.5 | 1.0 |
| basic zinc carbonate | 1.0 | - | - | - | - |
| zinc oxide | - | 0.5 | 1.5 | 1.0 | 1.0 |
| N,N'-m-phenylenebismaleimide | 1.0 | 0.4 | - | - | 0.9 |
| N,N'-p,p'-diphenylmethanebis-maleimide | - | - | 3.0 | 1.2 | - |
| bisphenol A | 0.3 | - | - | - | - |
| hydroquinone | - | 0.1 | - | - | - |
| N-isopropyl-N'-phenyl-p-phenylenediamine | - | - | 0.5 | - | - |
| triallylcyanurate | - | - | - | 0.3 | - |
| sulphur | - | - | - | - | 0.1 |

The blends were all free-flowing. Master batches were prepared by mixing 200 parts by weight of low-density polyethylene with 16 parts by weight of the above compositions and 2.5 parts by weight of dicumyl peroxide (40% active). These were then granulated, blended with 400 parts by weight of low density polyethylene, and extruded on a 32mm screw extruder, die setting 115°C, to obtain approximately 3mm thick sheet. Sheet samples were then expanded in an air-circulated oven at 195°C for 6 minutes. The foams were all found to have fine, uniform cell structures, with pinhole-free, non-sticky surfaces.

## Example 6

The following ingredients were blended together in a Papenmeier blender (all figures being wt%):

| Ingredient | Parts by weight |
|---|---|
| azodicarbonamide | 96.8 |
| zinc laurate | 1.5 |
| zinc oxide | 0.8 |
| N,N'-m-phenylenebismaleimide | 0.8 |
| Irganox® 1010 | 0.1 |

This blend was also free-flowing, and when blended into master batches and treated as described in Examples 1-5 above, again gave high quality foams with fine, uniform cell structures, with pinhole-free, non-sticky surfaces.

**Claims**

1. A method for the production of peroxide cross-linked polyethylene foam in which polyethylene is heated with a peroxide cross-linking agent in the presence of a suitable amount of a blowing agent composition which comprises azodicarbonamide, one or more compounds containing two or more maleimide groups, and a free-radical scavenging compound.

2. A method according to claim 1 in which the compound containing two or more maleimide groups is N,N'-m-phenylenebismaleimide, N,N'-p,p'-diphenylmethanebismaleimide, N,N'-m-phenylene-bismaleimide, N,N'-p-phenylenebismaleimide, N,N'-m-tolylenebismaleimide, 1,1'-(oxydi-4,1-phenylene)-bis[1H-pyrrole-2,5-dione], 1,1'-(2,2,4-trimethyl-1,6-hexanediyl)bis[1H-pyrrole-2,5-dione], 1,1',1''-(1,3,5-benzenetriyl)tris[1H-pyrrole-2,5-dione] or 1,1'-(1,3-phenylene)bis[3-methyl-1H-pyrrole-2,5-dione].

3. A method according to claim 1 or claim 2 in which the azodicarbonamide comprises from 80 to 99 % by weight of the blowing agent composition.

4. A method according to any of claims 1 to 3 in which the compound containing two or more maleimide groups comprises from 0.1 to 10 % by weight of the blowing agent composition.

5. A method according to claim 4 in which the compound containing two or more maleimide groups comprises from 0.2 to 5 % by weight of the blowing agent composition.

6. A method according to any of claims 2 to 5 in which the free-radical scavenging compound is a phenol having 1 to 4 phenolically connected OH groups.

7. A method according to any of claims 2 to 5, in which the free-radical scavenging compound is hydroquinone, 4-methoxyphenol, 2,2-bis(4-hydroxyphenyl)propane, 3(3,5-di-t-butyl-4-hydroxyphenyl)-propionate, 2,2'-methylenebis[6-(1-methylcyclohexyl)-p-cresol, 1,1,3-tris(2-methyl-4-hydroxy-5-t-butylphenyl)butane, N-isopropyl-N'-phenyl-p-phenylenediamine, polymeric dihydrotrimethyl-quinoline, dilaurylthiodipropionate, tris(nonylphenyl)phosphite, triallyl isocyanurate or triallyl cyanurate.

8. A method according to any of claims 1 to 7 in which the free-radical scavenging compound comprises from 0.02 to 3 % by weight of the blowing agent composition.

9. A composition for use in the production of peroxide cross-linked polyethylene foams, which comprises polyethylene, azodicarbonamide, one or more compounds containing two or more maleimide groups, and a free-radical scavenging compound as defined in claim 6 or claim 7.

**Patentansprüche**

1. Eine Methode zur Herstellung von Peroxid kreuzverzweigtem Polyethylenschaum, wobei Polyethylen mit einer Peroxid kreuzverzweigenden Substanz in Anwesenheit einer geeigneten Menge eines Blähmittels, das Azodicarbonamid ein oder mehrere Verbindungen mit zwei oder mehreren Maleinimidgruppen und eine Verbindung die freie Radikale fängt, enthält, erhitzt wird.

2. Eine Methode gemäß Anspruch 1, wobei die Verbindung die ein oder mehrere Maleinimidgruppen enthält, N,N′-m-Phenylenbismaleinimid, N,N′-p,p′-Diphenylmethan-bis-maleinimid, N,N′-m-Phenylenbismaleinimid, N,N′-p-phenylenbismaleinimid, N,N′-m-Toloylenbismaleinimid, 1,1′-(Oxydi-4,1-phenylen)-bis[1H-pyrrol-2,5-dion], 1,1′-(2,2,4-Trimethyl-1,6-hexandiyl)bis[1H-pyrrol-2,5-dion], 1,1′,1″-(1,3,5-Benzoltriyl)tris[1H-pyrrol-2,5-dion] oder 1,1′-(1,3-Phenylen)bis[3-methyl-1H-pyrrol-2,5-dion] ist.

3. Eine Methode gemäß den Ansprüchen 1 oder 2, wobei das Azodicarbonamid ein Gewicht von 80-99% des Blähmittels umfaßt.

4. Eine Methode gemäß einem der Ansprüche 1-3, wobei die Verbindung, die zwei oder mehrere Maleinimidgruppen enthält, ein Gewicht von 0,1-10% des Blähmittels umfaßt.

5. Eine Methode gemäß Anspruch 4, wobei die Verbindung, die zwei oder mehrere Maleinimidgruppen enthält, ein Gewicht von 0,2-5% des Blähmittels umfaßt.

6. Eine Methode gemäß einem der Ansprüche 2-5, wobei die Verbindung die freie Radikale fängt, ein Phenol mit 1 bis 4 phenolisch gebundenen OH Gruppen ist.

7. Eine Methode gemäß einem der Ansprüche 2-5, wobei die Verbindung die freie Radikale fängt, Hydrochinon, 4-Methoxyphenol, 2,2-bis(4-Hydroxyphenyl)propan, 3-(3,5-Di-t-butyl-4-hydroxyphenyl)-propionsäureester, 2,2′-Methylen-bis[6-(1-methylcyclohexyl)-p-kresol, 1,1,3-Tris(2-methyl-4-hydroxy-5-t-butylphenyl)butan, N-Isopropyl-N′-phenyl-p-phenylendiamin, polymeres Dihydrotrime-tylchinolin, Dilaurylthiodipropionsäureester, Tris(nonylphenyl)phosphit, Triallylisocyanurat oder Triallylcyanurat ist.

8. Eine Methode gemäß einem der Ansprüche 1-7, wobei die Verbindung die freie Radikale fängt, ein Gewicht von 0,02-3% des Blähmittels umfaßt.

9. Ein Mittel zur Verwendung in der Herstellung von Peroxid kreuzverzweigten Polyethylenschäumen, das Polyethylen, Azodicarbonamid, ein oder mehrere Verbindungen, die zwei oder mehrere Maleinimidgruppen enthalten und eine Verbindung die freie Radikale fängt, wie in den Ansprüchen 6 oder 7 definiert, umfaßt.

## Revendications

1. Procédé de production d'une mousse de polyéthylène réticulée par un peroxyde, dans lequel le polyéthylène est chauffé avec un agent de réticulation peroxydé en présence d'une quantité appropriée d'une composition d'un agent de gonflement qui comprend un azodicarbonamide, un ou plusieurs composés contenant deux ou plusieurs radicaux maléimide et un composé éliminant les radicaux libres.

2. Procédé suivant la revendication 1, dans lequel le composé contenant deux ou plusieurs radicaux maléimide est le N,N′-m-phénylènebismaléimide, le N,N′-p,p′-diphénylméthanebismaléimide, le N,N′-m-phénylène-bismaléimide, le N,N′-p-phénylènebismaléimide, le N,N′-m-tolylènebismaléimide, la 1,1′-(oxydi-1,4-phénylène)bis(1H-pyrrole-2,5-dione), la 1,1′-(2,2,4-triméthyl-1,6-hexanediyl)bis(1H-pyrrole-2,5-dione), la 1,1′,1″-(1,3,5-benzènetriyl)tris(1H-pyrolle-2,5-dione) ou la 1,1′-(1-3-phénylène)bis(3-méthyl-1H-pyrolle-2,5-dione).

3. Procédé suivant la revendication 1 ou 2, dans lequel l'azodicarbonamide compose 80 à 99% en poids de la composition d'agent de gonflement.

4. Procédé suivant l'une quelconque des revendications 1 à 3, dans lequel le composé contenant deux ou plusieurs radicaux maléimide compose 0,1 à 10% en poids de la composition d'agent de gonflement.

5. Procédé suivant la revendication 4, dans lequel le composé contenant deux ou plusieurs radicaux maléimide compose 0,2 à 5% en poids de la composition d'agent de gonflement.

6. Procédé suivant l'une quelconque des revendications 2 à 5, dans lequel le composé éliminant les radicaux libres est un phénol ayant de 1 à 4 radicaux OH phénoliques.

7. Procédé suivant l'une quelconque des revendications 2 à 5, dans lequel le composé éliminant les radicaux libres est une hydroquinone, un 4-méthoxyphénol, le 2,2-bis(4-hydroxyphényl)propane, le 3-(3,5-di-t-butyl-4-hydroxyphényl) propionate, le 2,2'-méthylènebis[6-(1-méthylcyclohexyl)-p-crésol], le 1,1,3-tris(2-méthyl-4-hydroxy-5-t-butylphényl)butane, la N-isopropyl-N'-phényl-p-phénylènediamine, la dihydrotriméthylquinoléine polymérique, le dilaurylthiodipropionate, la tris(nonylphényl)phosphite, l'isocyanurate de triallyle ou le cyanurate de triallyle.

8. Procédé suivant l'une quelconque des revendications 1 à 7, dans lequel le composé éliminant les radicaux libres compose 0,02 à 3% en poids de la composition d'agent de gonflement.

9. Composition à utiliser dans la production de mousses de polyéthylène réticulées par un peroxyde, qui comprend un polyéthylène, un azodicarbonamide, un ou plusieurs composés contenant deux ou plusieurs radicaux maléimide et un composé éliminant les radicaux libres comme défini à la revendication 6 ou 7.